(19) Europäisches Patentamt
European Patent Office
Office européen des brevets

(11) Publication number: **0 466 026 B1**

(12) **EUROPEAN PATENT SPECIFICATION**

(45) Date of publication of patent specification: **22.02.95**

(51) Int. Cl.[6]: **C08F 8/30**, C08F 8/44, C08C 19/22, C08F 26/06

(21) Application number: **91111116.9**

(22) Date of filing: **04.07.91**

(54) **Biodegradable polymers.**

(30) Priority: **07.07.90 JP 178516/90**

(43) Date of publication of application:
**15.01.92 Bulletin 92/03**

(45) Publication of the grant of the patent:
**22.02.95 Bulletin 95/08**

(84) Designated Contracting States:
**DE FR GB**

(56) References cited:
**FR-A- 2 231 683**
**FR-A- 2 437 418**
**GB-A- 1 098 892**

**WORLD PATENTS INDEX LATEST 10 November 1981 Derwent Publications Ltd., London,GB; AN 81-88537D 20 October 1981**

**CHEMICAL ABSTRACTS, vol. 102, no. 12, March 1985, Columbus, Ohio, US; abstractno. 96443V, 'PURIFICATION OF AOUEOUS PHOTOSENSITIVE RESIN SOLUTION' page 23;column 2 & JP-A-59176303**

(73) Proprietor: **MITSUBISHI RAYON CO., LTD**
**3-19, Kyobashi 2-chome**
**Chuo-ku**
**Tokyo (JP)**

(72) Inventor: **Kawabata, Nariyoshi**
**2-24, Shioji 1-chome,**
**Nishinari-ku**
**Osaka-shi,**
**Osaka (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 466 026 B1

## Description

### BACKGROUND OF THE INVENTION

a) Field of the Invention

The present invention relates to biodegradable polymers, and more specifically to biodegradable polymers with pyridinium groups introduced therein.

b) Description of the Prior Art

Synthetic polymers are abundantly used in the form of molded articles, fibers, sheets, films and the like both for industrial and domestic applications. It is however the current situation that many of these synthetic polymers are disposed of as they are without any special treatment. In general, synthetic polymers decompose very little, so that when thrown away as they are, they are not readily decomposed and tend to induce environmental contamination, leading to a worldwide social problem.

As a fundamental solution to this problem, the effectiveness of impartment of biodegradability to synthetic polymers is easily inferable. One known example of such an attempt includes composite materials made of starch and synthetic polymers. When this approach is followed, the composite materials are decomposed at the sites of the starch because the starch is biodegradable. It is hence necessary to treat the remaining segments only. The above approach has however provided absolutely no improvement to the inherent defect of synthetic polymers that they lack biodegradability. The desirability to develop a more biodegradable product remains therefore an important issue.

### OBJECTS AND SUMMARY OF THE INVENTION

An object of the present invention is to provide a biodegradable polymer.

Another object of the present invention is to provide a method for converting a hardly biodegradable synthetic polymer to a readily biodegradable one by increasing the compatibility between a microorganism and the former synthetic polymer.

The above-described objects of the present invention can be achieved by the provision of a biodegradable polymer, which comprises a synthetic polymer; and 0.01-10 mole %, per mole of the biodegradable polymer, of pyridinium groups directly bonded to the backbone of the synthetic polymer.

Biodegradable polymers each of which can be provided by the present invention and contains pyridinium groups directly bonded to the backbone of a synthetic polymer undergo biodegradation at the sites of the pyridinium groups, probably owing to their high compatibility with microbial cells. Molded or otherwise formed articles can therefore be biodegraded, resulting in destruction of the shapes of the molded or otherwise formed articles. The biodegradable polymers according to the present invention are therefore extremely useful for the maintenance of the environment.

### DETAILED DESCRIPTION OF THE INVENTION

Illustrative examples of pyridinium groups to be bonded directly to the backbone of a synthetic polymer upon production of a biodegradable polymer of the present invention include N-alkylpyridinium groups, N-arylpyridinium groups, N-arylalkylpyridinium groups, and N-allylpyridinium groups. Exemplary counter anions for such pyridinium groups include chlorine ions, bromine ions, nitrate anions, nitrite anions, phosphate anions, sulfate anions, sulfite anions, and sulfonate anions.

For the formation of the synthetic polymer which makes up the biodegradable polymer of the present invention, any monomer or monomers can be adopted as long as the resulting polymer permits direct bonding of pyridinium groups to its backbone, for example, by a method to be described subsequently. Examples of such suitable monomers include vinyl compounds ($CH_2=CXY$), olefins ($CXY=CZW$) and diolefins ($CH_2=CX\text{-}CY=CZW$), in which X, Y, Z and W are each selected from the group consisting of alkyl, allyl, aralkyl, aryl, alkenyl, alkinyl, cyano, alkoxyl, alkoxycarbonyl and acyl groups and fluorine, chlorine, iodine and bromine atoms. Preferred are synthetic polymers formed principally of homopolymers of these monomers, namely, those composed of recurring units represented by one of the following formulae:

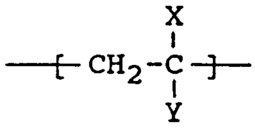 , 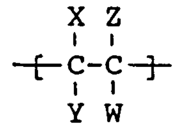 ,

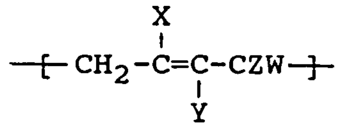 , 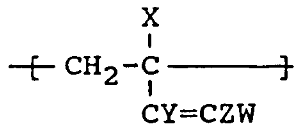 ,

etc.
as well as those composed primarily of copolymers of such monomers.

To facilitate the understanding of the biodegradable polymers according to the present invention, some examples of recurring units of synthetic polymers will hereinafter be described. Formula [1] indicates recurring units of an exemplary synthetic polymer having poor biodegradability, namely, polymethyl methacrylate.

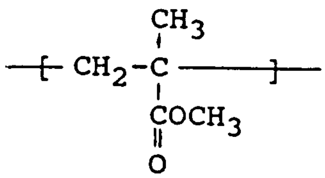

Formula [1]

Formula [2] shows an exemplary effective, recurring unit of a biodegradable polymer of the present invention, which has high compatibility with microorganisms, namely, poly-N-benzyl-4-vinylpyridinium chloride.

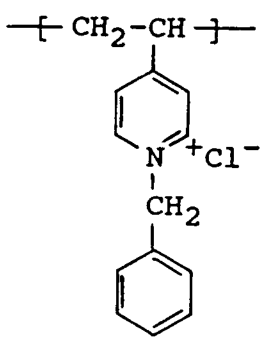

Formula [2]

Introduction of recurring units having the N-benzylpyridinium group of formula [2] into a polymer can be achieved, for example, by subjecting methyl methacrylate and 2-vinylpyridine or 4-vinylpyridine to radical copolymerization and then reacting the resultant copolymer with benzyl chloride in an amount equimolar to the vinylpyridine.

As is understood from the foregoing, any monomer or monomers copolymerizable with 2- or 4-vinylpyridine can be used as recurring units which make up the backbone of a synthetic polymer. In the present invention, it is therefore possible to form the backbone of a synthetic polymer by using a monomer copolymerizable with 2-vinylpyridine or 4-vinylpyridine, for example, methyl methacrylate and another monomer copolymerizable with methyl methacrylate.

Further, synthetic polymers containing pyridinium groups can be modified by subjecting their side chains to a chemical reaction, for example, by hydrolyzing alkoxycarbonyl groups of a polyacrylate ester into carboxyl groups.

The introduction rate of pyridinium groups in the backbone of a synthetic polymer is of the nature that can be designed depending on the application purpose such as the degradability desired for the biodegradable polymer or in accordance with the application form, namely, depending on whether it is used

in the form of a molded article, fibers, a sheet or a film or in any other form. The introduction rate of pyridinium groups cannot therefore be determined in any wholesale manner. In general, the introduction rate of pyridinium groups may however be in the range of 0.01-10 mole %, preferably in the range of 0.1-5 mole % per mole of the monomer or monomers copolymerized.

Production of such a synthetic polymer can be conducted by applying any conventional process which is widely used upon polymerization of vinyl compounds, olefins or diolefins. It is only necessary to add about 0.01-10 mole % of a copolymerizable monomer having a pyridyl group such as 2-vinylpyridine or 4-vinylpyridine to the monomer prior to its polymerization.

To produce a synthetic polymer, for example, by copolymerization with methyl methacrylate, it is possible, as in the conventional polymerization processes for methyl methacrylate, to use a bulk, suspension, solution or emulsion polymerization process in the presence of a radical polymerization initiator such as benzoyl peroxide, lauroyl peroxide or azobisisobutyronitrile, one of various ionic polymerization initiator or an organometal compounds such as a transition metal complex.

Taking methyl methacrylate as an example, the polymerization process will be described in detail. In a 500-mℓ, three-neck flask equipped with a reflux condenser, a bladed stirring rod and a nitrogen inlet tube, 100 g of toluene, 99 g of methyl methacrylate, 1 g of 4-vinylpyridine and 0.3 g of azobisisobutyronitrile are added. Polymerization can then be conducted by simply heating and stirring them at 80 °C for 6 hours in a nitrogen atmosphere. When the reaction mixture is poured into methanol after completion of the polymerization reaction, a polymer is allowed to precipitate. It is then only necessary to collect and dry the precipitate.

As a method for quaternizing, into pyridinium groups, pyridyl groups of a synthetic polymer obtained by copolymerization of a monomer having a pyridyl group with other copolymerizable monomer(s), it is only necessary to react, for example, benzyl chloride with pyridyl groups in an equimolar amount. A description will be made, taking the case of polymethyl methacrylate as an example. Benzyl chloride in an amount equimolar to vinylpyridine is added to the reaction mixture of the above-described polymerization or to a toluene solution of the polymer obtained in a dry form, followed by heating and stirring at 80 °C for 4 hours. When the contents are added to methanol after completion of the reaction, polymethyl methacrylate containing pyridinium groups is caused to precipitate. It is then only necessary to collect and dry the precipitate.

Formation of biodegradable polymers of the present invention, which are obtained by the process described above, into articles of various shapes can be conducted by using conventional molding or forming methods as they are.

Microbial selectivity of biodegradable polymers according to this invention has not been fully investigated. Their biodegradability can however be easily ascertained under conditions immersed in a conventional activated sludge aeration tank employed in a sewage treatment plant or under conditions buried in the ground. Namely, they can be confirmed, for example, by immersing molded articles for a predetermined number of days in an activated sludge aeration tank, measuring the molecular weights of the biodegradable polymers and then comparing them with their corresponding molecular weights before the immersion.

Example 1

A 500-mℓ, three-neck flask equipped with a reflux condenser, a bladed stirring rod and a nitrogen inlet tube was charged with a predetermined amount of toluene in advance. In a nitrogen atmosphere, a monomer mixture of the composition shown in Table 1 and 20 mmol (0.33 g) of azobisisobutyronitrile as a polymerization initiator were added. Polymerization was then conducted at the oil bath temperature of 90 °C for 6 hours in the case of the methyl methacrylate copolymer and at the oil bath temperature of 95 °C for 10 hours in the case of the styrene copolymer.

Table 1

| | Content of pyridinium groups (mole %) | Methyl methacrylate (g) | 4-Vinylpyridine (g) | Toluene (g) |
|---|---|---|---|---|
| Polymethyl methacrylate | 0 | 100.00 | - | 100.00 |
| | 1 | 98.90 | 1.10 | 100.00 |
| | 3 | 96.70 | 3.30 | 100.00 |
| | 5 | 94.50 | 5.50 | 100.00 |

| | Content of pyridinium groups (mole %) | Styrene (g) | 4-Vinylpyridine (g) | Toluene (g) |
|---|---|---|---|---|
| Polystyrene | 0 | 104.00 | - | 125.00 |
| | 1 | 102.96 | 1.04 | 125.00 |
| | 3 | 100.88 | 3.12 | 125.00 |
| | 5 | 98.80 | 5.20 | 100.00 |

On the day following the polymerization, each of the copolymers was added with benzyl chloride in an amount equimolar to 4-vinylpyridine. Benzyl chloride was then reacted under stirring in a nitrogen atmosphere at the oil bath temperature of 80°C for 4 hours in the case of the methyl methacrylate copolymer and for 6 hours in the case of the styrene copolymer. After completion of the reaction, the resulting biodegradable polymers were transferred to separate 300-mℓ Erlenmeyer flasks. The flasks were

hermetically sealed to store the biodegradable polymers therein.

For the sake of comparison, homopolymer of methyl methacrylate was produced under the same conditions except for the omission of 4-vinylpyridine.

The methyl methacrylate copolymer and homopolymer described above were formed into sheets of 1 cm in width, 2 cm in length and 0.5 mm in thickness by a casting process, respectively. To investigate their biodegradability, they were immersed in an activated sludge aeration tank of a sewage treatment plant in accordance with the schedule shown in Table 2.

To determine the biodegradability of the methyl methacrylate copolymer and homopolymer in terms of the degrees of reduction in molecular weight, the viscosities [η] of the immersed sheets were measured at 30°C in toluene and their viscosity-average molecular weights were then determined in accordance with the following formula:

$$\text{Viscosity-average molecular weight } M = \left(\frac{[\eta]}{K}\right)^{1/a}$$

where K = 7.0 x $10^{-3}$ and a = 0.71 were used as constants.

Table 2 shows the viscosity-average molecular weights of sheets, which had been made from a methyl methacrylate homopolymer containing no pyridinium groups and from methyl methacrylate copolymers containing 1 mole %, 3 mole % and 5 mole % of pyridinium groups, respectively, and which had been untreated and had been recovered after treatment for 14, 28, 42, 56 and 70 days, respectively.

Table 2

| Content of pyridinium groups (%) | Viscosity-average molecular weight | | | | | |
|---|---|---|---|---|---|---|
| | 0 | 14 | 28 | 42 | 56 | 70* |
| 0 | 95000 | 95000 | 90000 | 95000 | 95000 | 95000 |
| 1 | 79000 | 69000 | 59000 | 54000 | 45000 | 32000 |
| 3 | 74000 | 45000 | 32000 | 24000 | 20000 | 17000 |
| 5 | 64000 | 40000 | 24000 | 17000 | 17000 | 17000 |

* (days)

In the table, the molecular weight of the methyl methacrylate homopolymer free of introduced pyridinium groups remained substantially unchanged even 70 days later whereas, in the case of the polymer with 1 mole % of introduced pyridinium groups, it is observed that the molecular weight dropped from 79000 to 32000 seventy days layer. Incidentally, even in the case of the sheet of the copolymer with 1 mole % of introduced pyridinium groups, the transparency was substantially lost after the treatment for 28 days and the sheet treated for 70 days was easily broken when folded once over 180°.

A similar activated sludge treatment experiment was conducted with respect to polystyrenes which contained pyridinium groups. The molecular weight of polystyrene homopolymer employed in the experiment was 140,000. This molecular weight did not change at all even 70 days layer. The molecular weights of polystyrenes containing 1, 3 and 5 mole % of N-benzylpyridinium chloride, respectively, were however observed to drop from 234,000, 315,000 and 134,000 to 201,000, 248,000 and 105,000, respectively, after treatment with activated sludge for 70 days. Although not so marked as in the case of polymethyl methacrylate, it was also observed that the biodegradability of polystyrene can be improved by the introduction of pyridinium groups.

**Claims**

**1.** A biodegradable polymer comprising:

a synthetic polymer; and

0.01-10 mole %, per mole of the biodegradable polymer, of pyridinium groups bonded directly to

the backbone of the synthetic polymer.

2. The biodegradable polymer of claim 1, wherein the pyridinium groups are selected from the group consisting of N-alkylpyridinium groups, N-arylpyridinium groups, N-arylalkylpyridinium groups and N-allylpyridinium groups; and counter ions for the pyridinium groups are selected from the group consisting of chlorine ions, bromine ions, nitrate ions, nitrite ions, phosphate ions, sulfate ions, sulfite ions and sulfonate ions.

3. The biodegradable polymer of claim 1, wherein the synthetic polymer is a homopolymer or copolymer of a monomer selected from the group consisting of vinyl compounds, olefins and diolefins.

4. The biodegradable polymer of claim 1, wherein each effective unit with pyridinium groups directly bonded thereto is a poly-N-benzyl-4-vinylpyridinium composed of recurring units represented by the following formula:

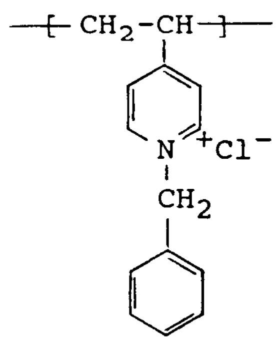

5. The biodegradable polymer of claim 1, which has been obtained by quaternizing, into pyridinium groups, pyridyl groups of a synthetic polymer formed by bulk, suspension, solution or emulsion polymerization of a methacrylic acid or styrene monomer and 2-vinylpyridine or 4-vinylpyridine in the presence of a radical polymerization initiator, ion polymerization initiator or organometal compound.

## Patentansprüche

1. Bioabbaubares Polymer, umfassend:
   - ein synthetisches Polymer; und
   - 0,01 bis 10 Mol%, pro Mol% des bioabbaubaren Polymers, an Pyridiniumgruppen, die direkt an dem Rückgrat des synthetischen Polymers gebunden sind.

2. Bioabbaubares Polymer nach Anspruch 1, worin die Pyridiniumgruppen ausgewählt sind aus der Gruppe, bestehend aus N-Alkylpyridiniumgruppen, N-Arylpyridiniumgruppen, N-Arylalkylpyridiniumgruppen und N-Allylpyridiniumgruppen; und worin die Gegenionen für die Pyridiniumgruppen ausgewählt sind aus der Gruppe, bestehend aus Chlorionen, Bromionen, Nitrationen, Nitritionen, Phosphationen, Sulfationen, Sulfitionen und Sulfonationen.

3. Bioabbaubares Polymer nach Anspruch 1, worin das synthetische Polymer ein Homopolymer oder copolymer eines Monomers ist, ausgewählt aus der Gruppe, bestehend aus Vinylverbindungen, Olefinen und Diolefinen.

4. Bioabbaubares Polymer nach Anspruch 1, worin jede effektive Einheit mit Pyridiniumgruppen, die direkt daran gebunden sind, ein Poly-N-Benzyl-4-vinylpyridinium ist, das sich aus Wiederholungseinheiten zusammensetzt, dargestellt durch die folgende Formel:

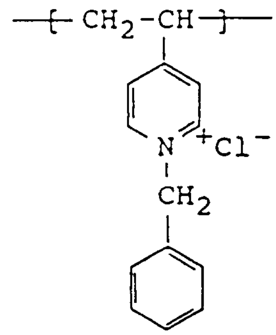

5. Bioabbaubares Polymer nach Anspruch 1, erhalten durch Quaternisieren von Pyridylgruppen eines synthetischen Polymers, gebildet durch Massen-, Suspensions-, Lösungs- oder Emulsionspolymerisation eines Methacrylsäure- oder Styrolmonomers und 2-Vinylpyridin oder 4-Vinylpyridin in Pyridiniumgruppen in der Gegenwart eines Radikalpolymerisationsinitiators, Ionenpoolymerisationsinitiators oder einer Organometallverbindung.

**Revendications**

1. Un polymère biodégradable comprenant:
un polymère synthétique; et
0,01-10 mole %, par mole du polymère biodégradable, de groupements pyridinium liés directement au squelette du polymère synthétique.

2. Le polymère biodégradable de la revendication 1, dans lequel les groupements pyridinium sont choisis dans le groupe composé des groupements N-alkylpyridinium, des groupements N-arylpyridinium, des groupements N-arylalkylpyridinium et des groupements N-allylpyridinium; et les contre-ions pour les groupements pyridinium sont choisis dans le groupe composé des ions chlorure, des ions bromure, des ions nitrate, des ions nitrite, des ions phosphate, des ions sulfate, des ions sulfite et des ions sulfonate.

3. Le polymère biodégradable de la revendication 1, dans lequel le polymère synthétique est un homopolymère ou un copolymère d'un monomère choisi dans le groupe constitué par les composés vinyliques, les oléfines et les dioléfines.

4. Le polymère biodégradable de la revendication 1, dans lequel chaque unité efficace avec les groupements pyridinium qui lui sont liés directement est un poly-N-benzyl-4-vinylpyridinium composé d'unités récurrentes représentées par la formule suivante:

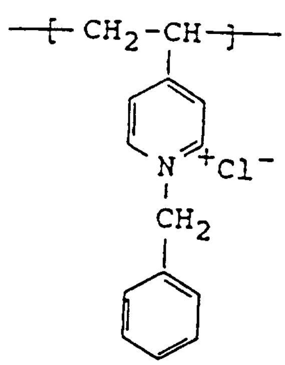

5. Le polymère biodégradable de la revendication 1, qui a été obtenu par quaternisation, en groupements pyridinium, de groupements pyridyle d'un polymère synthétique formé par polymérisation en masse,

en suspension, en solution ou en émulsion d'un monomère acide méthacrylique ou styrène et de 2-vinyl-pyridine ou de 4-vinyl-pyridine en présence d'un agent d'amorçage de polymérisation radicalaire d'un agent d'amorçage de polymérisation ionique ou d'un composé organométallique.